Europäisches Patentamt

(19) European Patent Office

Office européen des brevets

(11) Publication number: **0 010 965**
**B1**

(12) **EUROPEAN PATENT SPECIFICATION**

(45) Date of publication of patent specification: 05.05.82

(51) Int. Cl.³: **B 65 D 25/52, G 01 F 11/08**

(21) Application number: **79302399.5**

(22) Date of filing: **01.11.79**

(54) A squeeze-bottle, liquid-dispensing container.

(30) Priority: **02.11.78 GB 4292178**

(43) Date of publication of application:
**14.05.80 Bulletin 80/10**

(45) Publication of the grant of the patent:
**05.05.82 Bulletin 82/18**

(84) Designated Contracting States:
**BE DE FR GB IT**

(56) References cited:
**DE - A - 2 710 639**
**FR - A - 1 393 789**
**FR - E - 88 270**

(73) Proprietor: **BETTIX LIMITED**
**Dunbar Road**
**New Malden Surrey KT3 3RG (GB)**

(72) Inventor: **Jackman, Anthony Douglas**
**12 Radstone Court Hill View Road**
**Woking Surrey (GB)**

(74) Representative: **Weston, Walter et al,**
**PHILLIPS & LEIGH 7 Staple Inn Holborn**
**London WC1V 7QF (GB)**

Courier Press, Leamington Spa, England.

### A squeeze-bottle, liquid-dispensing container

This invention relates to a squeeze-bottle, liquid-dispensing container comprising a liquid-holding, deformable bottle, a dispensing receptacle and a duct extending from the bottle to the receptacle so that liquid can be expressed from the bottle, through the duct into the receptacle, or sucked back, by squeezing or relaxing squeeze of the bottle to change its volume.

It has already been proposed, for example in French Patent Specification No. 1393789, to provide a squeeze-bottle, liquid-dispensing container having a liquid-holding bottle, a measuring and dispensing receptacle moulded from resiliently flexible material integrally with the bottle, and a duct, extending from close to the bottom of the bottle to the receptacle. According to the present invention, such a container, comprising the bottle, the receptacle and the duct, is integrally moulded from the resiliently flexible material and the bottle, receptacle and duct form an integral whole with a constant positional interrelationship of the bottle, receptacle and duct.

In the container of the above-mentioned French specification, and in all other known proposals for squeeze-bottle, liquid-dispensing containers, the transfer duct is a separately made conduit or pipe member which is inserted in the bottle.

In one prior proposal, in U.K. Patent Specification No. 749407, a dispensing receptacle, called a dosage receptacle, is shown as being made, of plastic material, in one piece with a tube and is inserted into the bottle through the opening in the bottle neck.

There has been a proposal, in French Addition No. 88270 to Patent Specification No. 1453848, to mould a hollow article, in particular a beverage bottle with a drinking tube, by moulding a tube, incorporated wholly or partly externally of the hollow article, integrally with the wall of the article and, in one embodiment, vertically parallel with the wall.

In none of the prior proposals has there been any suggestion to mould, as an integral whole, a squeeze bottle, dispensing receptacle and transfer duct as provided by the present invention.

By moulding the duct integrally with the bottle and receptacle, not only is there saved the cost of manufacture, insertion and securing of a separate duct, or a combined duct and receptacle, but the location and inlet and outlet levels of the duct are determined once and for all in the manufacture of the container. This avoids uncertainty in the measuring of dispensed quantities, in cases in which the outlet level of the duct determines the quantity dispensed, and also avoids the container becoming unserviceable should the duct be materially displaced or lost.

Preferably the container is formed from thermoplastic material, such as polyethylene or polypropylene, by blow-moulding to define the receptacle and the duct by opposed and interwelded portions of the material, the duct extending upwardly externally alongside the wall of the bottle from an inlet through the bottle wall near the bottom thereof to an outlet opening through the wall of the receptacle. The opposed and interwelded material portions are preferably stiff webs which lie in a major axis medial plane of the transverse section of the container.

In a preferred embodiment, the container in side elevation is of rectangular shape, the bottle has a mouth on a neck offset to one side of the upper part of the container, the receptacle is formed alongside the neck on a shoulder of the container, and a mouth of the receptacle is formed on a neck thereof, the mouth of the bottle and the mouth of the receptacle each having a closure.

The invention is illustrated by way of example on the accompanying drawings, in which:—

Fig. 1 is a side elevation of a container according to the invention,

Fig. 2 is a cross section on the line II—II of Fig. 1 and

Figs. 3 to 5 are somewhat diagrammatic side elevations of the container of Fig. 1 in successive conditions of use.

The container illustrated is made by known blowmoulding technology in which a tubular parison of thermoplastic material is extruded and then blown while pressed between a pair of dies to flatten and interweld opposed wall portions, around the hollow shapes of the container, receptacle and duct, and cut off any material excess to the required overall shape.

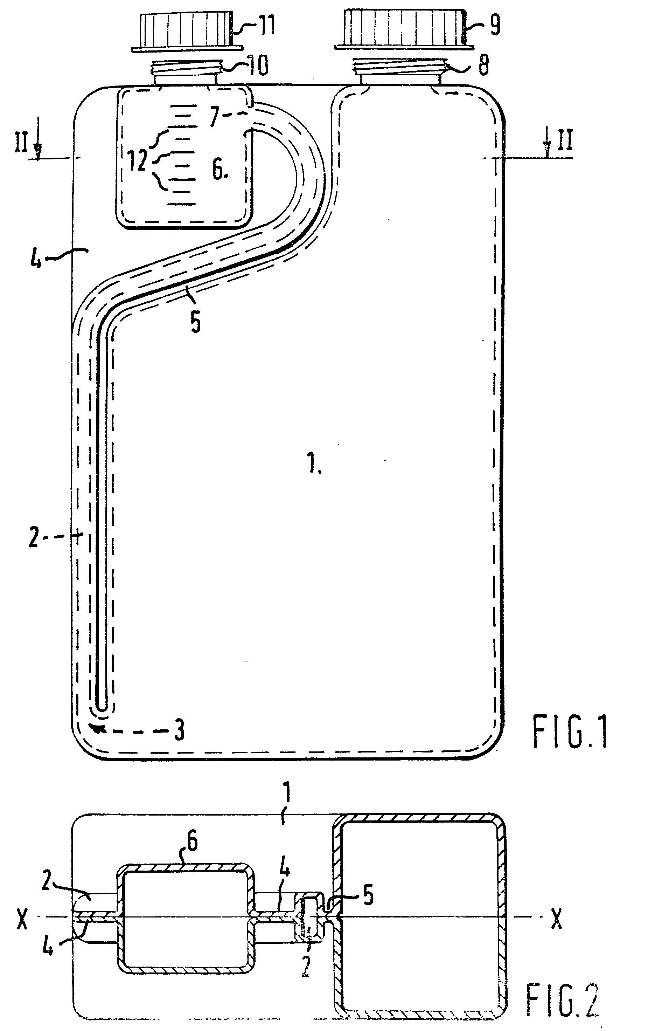

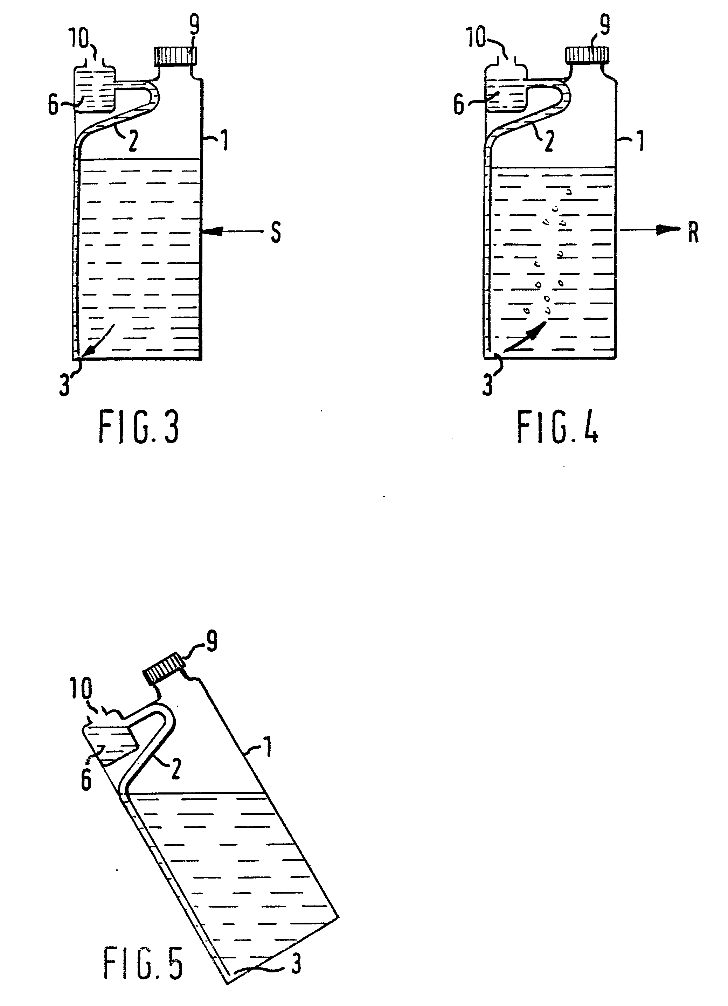

As shown by Figs. 1 and 2, the container comprises a bottle 1 formed integrally with a duct 2 which extends, from a bottom inlet 3, upwards externally alongside the bottle and is defined by opposed wall portions of the container flattened and interwelded to form web portions 4 and 5 which similarly define a dispensing receptacle 6, into which the duct 2 opens by an outlet 7, integrally moulded on the shoulder of the container.

In Fig. 2 the webs 4 and 5 are shown as composed of two distinct layers but this is only for the purposes of illustration, the moulded material in the webs being in practice homogenuously interwelded. The mould parting line along the meeting plane of the moulding tools is indicated by the broken line X—X in Fig. 2.

The bottle is moulded with a screw-threaded neck 8, for a closure cap 9, and the receptacle 6 similarly has a neck 10 for a cap 11 to close the mouth thereof. The wall of the receptacle 6 is shown moulded with graduation marks 12, to indicate the levels for given volumes of liquid to be dispensed. The material of the whole container is transparent or translucent.

The container is delivered to the user with the bottle 1 filled with liquid to be dispensed, or may be filled or re-filled through the neck 8, and may be used in the following manner to dispense a full measure from the receptacle 6.

After removing or loosening the receptacle cap 11, and making sure that the container cap 9 is tightly closed, the bottle 1 is squeezed, as indicated by the arrow S in Fig. 3 to reduce its volume and express liquid through the duct 2 into the receptacle 6 until it is seen that the duct outlet 7 is immersed.

On release from squeezing, as indicated by the arrow R in Fig. 4, the bottle 1 recovers its volume and liquid is sucked back through the duct 2 until the liquid level in the receptacle 6 is reduced to the outlet 7 through which air, not liquid, is then inspired.

The cap 11 being removed, the measured amount of liquid can be poured from the receptacle 6 (Fig. 5).

By judicious squeezing, less than a full measure, as observed against the graduation marks 12, may be dispensed. Also, provided that the liquid is at a suitably low level in the bottle 1, liquid may be returned from the receptacle to the bottle by tilting for liquid to flow back through the duct 2, the caps 9 and 11 being loosened.

## Claims

1. A squeeze-bottle liquid-dispensing container having a liquid-holding bottle (1), a measuring and dispensing receptacle (6) moulded from resiliently flexible material integrally with the bottle (1), and a duct (2), extending from close to the bottom of the bottle (1) to the receptacle (6), characterised thereby that the container, comprising the bottle (1), the receptacle (6) and the duct (2), is integrally moulded from the resiliently flexible material and the bottle, receptacle and duct form an integral whole with a constant positional interrelationship of the bottle, receptacle and duct.

2. A container according to claim 1, characterised thereby that the receptacle (6) and the duct (2) are defined by opposed and interwelded portions (4, 5) of the material, the duct extending upwardly externally alongside the wall of the bottle (1) from an inlet (3) through the bottle wall near the bottom thereof to an outlet (7) opening through the wall of the receptacle (6).

3. A container according to claim 2, characterised thereby that the receptacle (6) and duct (2) are defined by opposed and interwelded stiff webs (4, 5) which lie in a major axis medial plane (X—X) of the transverse section of the container.

4. A container according to claim 1, 2 or 3, characterised thereby that the container in side elevation is of rectangular shape, the bottle (1) has a mouth on a neck (8) offset to one side of the upper part of the container, the receptacle (6) is formed alongside the neck (8) on a shoulder of the container, and a mouth of the receptacle (6) is formed on a neck (10), the mouth of the bottle and the mouth of the receptacle each having a closure (9, 11).

## Patentansprüche

1. Ausgabebehälter für Flüssigkeiten in Form einer Quetschflasche mit einer die Flüssigkeit enthaltenden Vorratsflasche, einem Meß- und Abgabebecher, der aus einem elastisch verformbaren Material mit der Flasche einstückig gegossen ist, und einem Rohr, das sich nahe vom Boden der Vorratsflasche zum Meßbecher erstreckt, dadurch gekennzeichnet, daß der aus der Vorratsflasche (1), dem Becher (6) und dem Rohr (2) bestehende Ausgabebehälter aus dem elastisch verformbaren Material einstückig gegossen ist und daß die Vorratsflasche (1), das Rohr (2) und der Becher (6) ein einstückiges Ganzes mit unveränderlicher Relativstellung der Vorratsflasche, des Bechers und des Rohres bilden.

2. Ausgabebehälter nach Anspruch 1, dadurch gekennzeichnet, daß der Becher (6) und das Rohr (2) von einander gegenüberliegenden und miteinander verschweißten Bereichen (4, 5) des Materials begrenzt sind, wobei sich das Rohr (2) von einer in der Wand der Vorratsflache (1) nahe deren Boden angeordneten Eintrittsöffnung (3) längs der Außenseite der Wand der Vorratsflasche nach oben zu einer in der Wand des Bechers (6) angeordneten Austrittsöffnung (7) erstreckt.

3. Ausgabebehälter nach Anspruch 2, dadurch gekennzeichnet, daß der Becher (6) und das Rohr (2) durch einander gegenüberliegende und miteinander verschweißte, steife Bahnen (4, 5) begrenzt sind, die im Querschnitt des Behälters in der die Hauptachse enthaltenden Mittelebene liegen.

4. Ausgabebehälter nach einem der Ansprüche 1 bis 3, dadurch gekennzeichnet, daß der Behälter in der Seitenansicht rechteckig ist, daß die Vorratsflasche (1) eine Mündung an einem Hals (8) aufweist, der im oberen Bereich des Behälters seitlich versetzt angeordnet ist, daß der Becher (6) längs des Halses (8) auf einer Schulter des Behälters ausgebildet ist und daß eine Mündung des Mechers (6) an einem Hals (10) ausgebildet ist, wobei die Mündungen der Voratsflasche (1) und des Bechers (6) jeweils mit einem Deckel (9, 11) versehen sind.

## Revendications

1. Récipient distributeur de liquide à bouteille compressible, ayant une bouteille (1) contenant du liquide, un réservoir de dosage et de distribution (6) moulé dans une matière élastiquement flexible d'une seule pièce avec la bouteille (1), et un conduit (2) s'étendant du voisinage du fond de la bouteille (1) jusqu'au

**0 010 965**

réservoir (6), caractérisé en ce que le récipient, y compris la bouteille (1), le réservoir (6) et le conduit (2), est moulé d'une seule pièce dans la matière élastiquement flexible, la bouteille, le réservoir et le conduit formant un tout d'une seule pièce en occupant des positions relatives permanentes.

2. Récipient selon la revendication 1, caractérisé en ce que le réservoir (6) et le conduit (2) sont définis par des portions opposées et soudées entre elles (4, 5) de la matière constitutive, le conduit s'étendant vers le haut à l'extérieur le long de la paroi de la bouteille (1) depuis une entrée (3) à travers la paroi de la bouteille au voisinage du fond de celle-ci jusqu'à une sortie (7) débouchant à travers la paroi du réservoir (6).

3. Récipient selon la revendication 2, caractérisé en ce que le réservoir (6) et le conduit (2) sont définis par des cloisons rigides opposées soudées entre elles (4, 5) situées dans un plan médian principal (X—X) de la section transversale du récipient.

4. Récipient selon l'une quelconque des revendications 1, 2 et 3, caractérisé en ce que le récipient a une forme rectangulaire en élévation latérale, que la bouteille (1) a une embouchure sur un goulot (8) déporté sur un côté de la partie supérieure du récipient, que le réservoir (6) est formé à côté du goulot (8) sur un épaulement du récipient, et qu'une embouchure est formée sur le goulot (10) du récipient (6), l'embouchure de la bouteille et l'embouchure du réservoir ayant chacune une fermeture (9, 11).

**0 010 965**

FIG.1

FIG.2

FIG.3

FIG.4

FIG.5